## Europäisches Patentamt

## European Patent Office

## Office européen des brevets

(19)

(11) Veröffentlichungsnummer: **0 201 570**
**B1**

(12) # EUROPÄISCHE PATENTSCHRIFT

(45) Veröffentlichungstag der Patentschrift:
**19.04.89**

(51) Int. Cl.⁴: **B 60 K 41/08,** F 16 H 3/12

(21) Anmeldenummer: **85905761.4**

(22) Anmeldetag: **31.10.85**

(86) Internationale Anmeldenummer:
**PCT/DE 85/00432**

(87) Internationale Veröffentlichungsnummer:
**WO 86/02603 (09.05.86 Gazette 86/10)**

(54) **SCHALTEINRICHTUNG FÜR KRAFTFAHRZEUG-STUFENGETRIEBE MIT ZUGKRAFTUNTERBRECHUNG.**

(30) Priorität: **02.11.84 DE 3440057**

(43) Veröffentlichungstag der Anmeldung:
**20.11.86 Patentblatt 86/47**

(45) Bekanntmachung des Hinweises auf die Patenterteilung:
**19.04.89 Patentblatt 89/16**

(84) Benannte Vertragsstaaten:
**AT BE CH DE FR GB IT LI LU NL SE**

(56) Entgegenhaltungen:
**EP-A-0 001 298**
**DE-A-1 941 445**
**DE-A-2 033 314**
**GB-A-1 276 554**
**GB-A-2 097 076**

(73) Patentinhaber: **ZWN ZAHNRADWERK NEUENSTEIN GMBH & CO., Hermann-Hagenmeyer- Strasse, D-7113 Neuenstein (DE)**

(72) Erfinder: **MÜLLER, Erich, R., Hohe Strasse 15, D-7110 Öhringen- Cappel (DE)**
Erfinder: **VOLKERT, Edmund, Steppachweg 77, D-7107 Neckarsulm (DE)**
Erfinder: **RIENECKER, Wolfgang, Rosenstrasse 1, D-8522 Herzogenaurach (DE)**

(74) Vertreter: **Witte, Alexander, Dr.- Ing., Schickhardtstrasse 24, D-7000 Stuttgart 1 (DE)**

LIBER, STOCKHOLM 1989

## Beschreibung

Die Erfindung betrifft eine Schalteinrichtung für Kraftfahrzeug-Stufengetriebe mit Zugkraftunterbrechung, bei dem Übersetzungsstufen über formschlüssige Elemente in den Kraftfluß zwischen einer Antriebswelle und einer Abtriebswelle des Getriebes schaltbar sind, mit Hand-Steuerschaltern, die an ein Steuergerät angeschlossen sind, wobei das Steuergerät über Servoeinrichtungen die formschlüssigen Mittel betätigt, mit einen Sensor und weiteren Sensoren, die mit rotierenden Marken der Abtriebswelle sowie anderer sich drehender Teile des Getriebes zusammenwirken, und mit Schaltmitteln, die aus den Signalen der Sensoren einen Synchronpunkt des Getriebes ermitteln und bei Erreichen des Synchronpunktes ein Schliessen der formschlüssigen Elemente des einzulegenden Ganges bewirken.

Schaltereinrichtungen dieser Art sind bekannt (z. B. aus der DE-A-1 941 445) und werden im allgemeinen als "Halbautomaten" bezeichnet. Das Getriebe ist dabei ein übliches handgeschaltetes Kraftfahrzeug-Zahnradwechselgetriebe. Diese Getriebe sind meist so ausgebildet, daß die Antriebswelle eine Vorgelegewelle antreibt, auf der mehrere Zahnräder angeordnet sind. Diese mehreren Zahnräder stehen ständig in Eingriff mit einer entsprechenden Anzahl Zahnräder auf der Abtriebswelle, die auf dieser jedoch nicht drehfest angeordnet sind. Zum Schließen des Kraftflusses zwischen Antriebs- und Abtriebswelle dienen Schaltmuffen auf der Abtriebswelle, die mit dieser drehfest verbunden und auf dieser längsverschieblich angeordnet sind. Über Schaltgabeln wird je nach einzulegendem Gang eine bestimmte Schaltmuffe in formschlüssige Verbindung mit einem Zahnrad der Abtriebswelle gebracht, so daß dieses Zahnrad nunmehr drehfest mit der Abtriebswelle verbunden ist und das Getriebe die durch dieses Zahnrad und das zugehörige Zahnrad der Vorgelegewelle definierte Übersetzungsstufe darstellt.

Während des Gangwechsels, das heißt in der Zeit vom Lösen des alten Ganges bis zum Einlegen des neuen Ganges ist der Kraftfluß zwischen Antriebswelle und Abtriebswelle unterbrochen. Man spricht daher von Getrieben mit Zugkraftunterbrechung im Gegensatz zu Vollautomatgetrieben, die üblicherweise als Planetengetriebe ausgebildet sind und bei denen die Kupplungen bzw. Bremsbänder der einzelnen Gangstufen zeitlich überschneidend angesteuert werden, so daß sich keine Zugkraftunterbrechung einstellt.

Zahnradwechselgetriebe mit Zugkraftunterbrechung sind ganz wesentlich einfacher im Aufbau und daher billiger in der Herstellung als Vollautomatgetriebe ohne Zugkraftunterbrechung. Außerdem arbeiten Zahnradwechselgetriebe grundsätzlich ohne Schlupf, während zugkraftunterbrechungsfreie Vollautomatgetriebe einen hydraulischen Drehmomentwandler benötigen, der beim Anfahren und Schalten für einen weichen Gangwechsel sorgt, dabei jedoch notwendig einen Schlupf aufweisen muß. Zwar ist es bekannt, diese Schlupfverluste durch eine sogenannte Wandlerüberbrückungskupplung zu vermindern, dies erhöht jedoch den erforderlichen Aufwand noch mehr.

Insgesamt sind daher Zahnradwechselgetriebe mit Zugkraftunterbrechung nicht nur erheblich günstiger in den Herstellungskosten, sie führen in aller Regel auch zu einem niedrigeren Treibstoffverbrauch des Kraftfahrzeuges.

Bei den eingangs genannten, bekannten Schalteinrichtungen ging man in der Regel so vor, daß man ein übliches Getriebe unverändert übernahm und die vom Fahrer sonst manuell vorgenommene Bewegung des Schalthebels entsprechend der vorgegebenen Schaltkulisse mit Servomechanismen nachahmte. Über einen weiteren Servomechanismus wurde bei einigen Ausführungsformen die zwischen Motor und Getriebe befindliche Trennkupplung vor dem Ausrücken des alten Ganges geöffnet und nach dem Einlegen des neuen Ganges wieder geschlossen. Die Gangwahl erfolgte dabei entweder in der herkömmlichen Weise mit einem Schalthebel, der nun jedoch nicht mehr direkt auf das Getriebe, sondern vielmehr auf ein Steuergerät einwirkte, es sind jedoch auch Schalteinrichtungen bekannt, bei denen die Gangwahl automatisch erfolgte, das heißt üblicherweise in Abhängigkeit von der Geschwindigkeit des Fahrzeuges und der vom Fahrpedal vorgegebenen Last. Auch Mischformen dieser Steuerungen sind bekannt, bei denen die Gangwahl üblicherweise automatisch erfolgt, jedoch zusätzlich ein manueller Eingriff mit wahlfreier Ansteuerung der Gänge möglich ist.

Da man sich - wie bereits erwähnt - bei diesen Halbautomaten meist handelsüblicher Getriebe bedient hat, wurde die Synchronisierung der miteinander in Eingriff zu bringenden Elemente des neuen Ganges auch auf die herkömmliche Art und Weise bewirkt, nämlich über Synchronringe, die zwischen den Schaltmuffen und der zugehörigen Verzahnung des Gangrades wirken. Synchronringe gleichen die Drehzahlen der Elemente durch Abbremsen aneinander an und sorgen durch eine sogenannte Sperrsynchronisation dafür, daß die Elemente erst dann miteinander in Eingriff gebracht werden können, wenn die Drehzahlen ungefähr gleich groß sind.

Es ist jedoch auch bekannt, die Drehzahlverhältnisse an den miteinander in Eingriff zu bringenden Elemente dadurch zu erfassen und zu überwachen, daß man die Drehzahlen am Eingang und am Ausgang des Getriebes mißt und durch Umrechnung über die Übersetzungsstufen diejenigen Drehzahlen ermittelt, die an den miteinander in Eingriff zu bringenden Elementen vorliegen. Erst bei ungefährer Drehzahlgleichheit, die zum Beispiel auch durch Abbremsen des schneller drehenden Elementes bewirkt wurde, wurden die Gangschaltelemente geschlossen.

Eine solche Ermittlung der Drehzahlverhältnisse im Getriebe aus Hilfsgrößen am Getriebeein- und ausgang ist jedoch recht unzuverlässig und gestattet nur näherungsweise, einen Punkt zu erfassen, in dem die Drehzahlen der miteinander in Eingriff zu bringenden Elemente gleich sind. Die exakte Position der Elemente zueinander kann damit in keinem Fall erfaßt werden, und zwar weder - bei miteinander in Eingriff zu bringenden Verzahnungen - die absolute Winkelposition bestimmter Zähne zueinander, noch allgemein die Position der Elemente, in der (irgendwelche) Zähne exakt (irgendwelchen) Lücken gegenüberstehen. Es kommt daher beim Schalten zwingend zu einem Aufeinandertreffen der Elemente bei - wenngleich auch geringer - Differenzdrehzahl und damit zu einer hohen Belastung der Zahnflanken und einem zunächst undefinierten Formschluß der Elemente. Dieser undefinierte Formschluß führt auch zu undefinierten Schaltzeiten, weil die Zeit, die für den Formschluß benötigt wird, von den zufälligen Ausgangspositionen der Zahnräder abhängt, die wiederum eine Funktion von äußeren Einflußgrößen sind, beispielsweise der Temperatur des Getriebeöles. Diese undefinierten Schaltzeiten führen ihrerseits dazu, daß eine automatisierte Kupplung auf die längstmögliche Schaltzeit ausgelegt werden muß, will man nicht erneut einen hohen Aufwand treiben, um das Schaltgeschehen im einzelnen zu verfolgen.

Insgesamt ergeben sich damit aus Sicherheitsgründen sehr hohe Schaltzeiten, die vor allem bei Zug-Hochschaltungen des Getriebes, beispielsweise beim Beschleunigen am Berg, zu Problemen führen können.

Der Erfindung liegt daher die Aufgabe zugrunde, eine Schalteinrichtung der eingangs genannten Art dahingehend weiterzubilden, daß die formschlüssigen Getriebeschaltelemente optimal ineinander eingefädelt werden, so daß ein Höchstmaß an Schaltkomfort bei nur sehr kurzen Schaltzeiten ermöglicht wird.

Diese Aufgabe wird erfindungsgemäß dadurch gelöst, daß die weiteren Sensoren mit Marken der von der Antriebswelle angetriebenen formschlüssigen Elemente zusammenwirken, daß die Schaltmittel die Phasenlage zwischen diesen Elementen und der Abtriebswelle ermitteln und bei Erreichen einer vorbestimmten Phasenlage ein Schließen der formschlüssigen Elemente bewirken.

Die Erfindung löst damit die zugrundeliegende Aufgabe vollkommen, weil im Gegensatz zu den bekannten Schalteinrichtungen der Schaltzeitpunkt nicht von einer bestimmten Differenzdrehzahl abhängig gemacht wird, sondern vielmehr von einer exakten Winkel-Differenzposition der Schaltelemente, vorzugsweise der Differenzposition Null.

Es ist damit erstmals möglich, die Gangschaltelemente nicht nur in definierter Drehlage zueinander in Eingriff zu bringen, das heißt in einer Lage, bei der definierte Zähne in definierte Zahnlücken eingreifen, man kann darüber hinaus gewährleisten, daß beim Schließen der Gangschaltelemente die Zähne exakt in Zahnlücken greifen und nicht erst auf Gegenzähne auftreffen, davon abrutschen und dann erst in Zahnlücken eingreifen.

Die erfindungsgemäße Schalteinrichtung ermöglicht daher erstmals eine vollkommen geregelte Synchronisation mit exaktem Formschluß in einem optimalen Synchronisationspunkt.

Die Erfindung eignet sich besonders für übliche Schaltgetriebe, die sich dadurch auszeichnen, daß die formschlüssigen Elemente Schaltmuffen und Verzahnungen von die Übersetzungsstufen bildenden Zahnrädern des Getriebes sind, die gemeinsam auf der Abtriebswelle angeordnet sind, wobei die Schaltmuffen drehfest mit der Abtriebswelle verbunden sind, während die sich lose auf der Abtriebswelle drehenden Zahnräder ständig von der Antriebswelle angetrieben werden.

Es versteht sich jedoch, daß die erfindunggemäße Schalteinrichtung sich auch für andere Getriebetypen eignet, beispielsweise Doppelkupplungsgetriebe und dergleichen.

Bei einer Ausführungsform der Erfindung mit einem vorstehend geschilderten üblichen Getriebe sind die Verzahnungen Außenverzahnungen und die weiteren Sensoren wirken mit den Außenverzahnungen zusammen.

Diese Maßnahme hat den Vorteil, daß die Sensoren einfach von außen mit den Verzahnungen zusammenwirken können und daß Sensortypen einsetzbar sind, wie man sie prinzipiell im Kraftfahrzeugbereich für die Erfassung von Drehzahlen kennt, beispielsweise bei Zündeinrichtungen, Steuerungen von Getriebevollautomaten und Antiblockiersystemen.

Bei einer weitere Ausgestaltung der Erfindung werden die Signale der Sensoren einem Phasendetektor mit nachgeschaltetem Komparator zugeführt.

Ist der Komparator ein Null-Detektor bzw. ein 180°-Detektor, kann auf diese Weise besonders einfach der Zustand erkannt werden, daß die beiden miteinander in Eingriff zu bringenden Elemente nicht nur die Differenzdrehzahl Null aufweisen, sondern darüber hinaus noch in einer bestimmten Winkellage zueinander stehen, die einer vorgegebenen Sollage entspricht.

Bei einer Weiterbildung dieses Ausführungsbeispiels sind die Signale Analogsignale und der Phasendetektor ist ein Mischer.

Diese Ausführungsform hat den Vorteil, daß eine genaue Erkennung eines Zustandes möglich ist, bei dem Zähne genau Lücken gegenüberstehen.

Bei einer anderen Ausgestaltung des Ausführungsbeispiels weisen die Marken der Abtriebswelle und der formschlüssgen Elemente jeweils eine Bezugsmarke auf, die Signale sind Digitalsignale und der Phasendetektor umfaßt mit den Bezugsmarken synchronisierte Zähler sowie eine Subtrahierstufe.

Bei dieser Ausführungsform ergibt sich nicht nur der Vorteil, daß eine genaue Positionierung der Zähne des einen Elementes zu den Lücken des anderen Elementes möglich ist, aufgrund der Bezugsmarken ist auch eine eindeutig definierte Zuordnung der Winkellage der beiden Elemente zueinander derart möglich, daß jeweils ein bestimmter Zahn einer bestimmten Lücke gegenübersteht. Durch das häufige Vorbeibewegen der Bezugsmarke an den Sensoren ergibt sich darüber hinaus der weitere Vorteil, daß gegebenenfalls aufgrund von Fehlmessungen der Sensoren auftretende Zählfehler bereits nach einem Durchlauf des Zahnkranzes wieder kompensiert werden, weil jeder Durchlauf einer Bezugsmarke das System neu eicht.

Bei einem bevorzugten Ausführungsbeispiel der Erfindung umfassen die weiteren Sensoren einen Lichtleiter, der einen Lichtstrahl auf die Marken der formschlüssigen Elemente wirft und einen von den Marken reflektierten Lichtstrahl auffängt.

Diese Ausführungsform hat den besonderen Vorteil, daß die dabei in Getriebenähe lediglich erforderlichen Lichtleiter außerordentlich beständig gegen Umgebungseinflüsse, insbesondere hohe Temperaturen sind, wie sie im Getriebeöl auftreten können. Auch hat sich gezeigt, daß man mit Lichtleitern durch geeignete Dimensionierung der Lichtleiter und geeignete Wahl des spektralen Bereiches des Lichtes auch in einem Ölnebel arbeiten kann, wie er im Getriebegehäuse während des Betriebes des Getriebes vorliegt.

Bei einer anderen Ausgestaltung der Erfindung umfassen die weiteren Sensoren eine Spule, deren Auswert-Elektronik in Abstand von den Sensoren angeordnet ist.

Diese Maßnahme hat den Vorteil, daß alternativ zu den genannten Lichtleitern auch im Zusammenwirken mit Zahnkränzen im Automobil bewährte Induktionssensoren verwendet werde können, wobei die Anordnung der Auswert-Elektronik außerhalb des Getriebegehäuses oder zumindest in wirksamem Abstand von den Sensoren sicherstellt, daß insbesondere die hohe Temperatur des Getriebeöles sich nicht negativ auf die Elemente der Auswert-Elektronik auswirkt.

Schließlich ist noch eine Ausführungsform der Erfindung bevorzugt, bei der zwei Hand-Steuerschalter vorgesehen sind, mit denen ein Hoch- bzw. Rückschalten des Getriebes um jeweils einen Gang auslösbar ist und das Steuergerät den jeweils einzulegenden Gang aus einem Ringzähler ausliest.

Diese Maßnahme hat gegenüber handgeschalteten Getrieben mit wahlfreiem Gangzugriff den Vorteil, daß das Getriebe leichter bedient werden kann, weil je nach vorliegenden Fahrbedingungen nur Signale für ein Hoch- oder Rückschalten erforderlich sind. Gegenüber Vollautomaten hat diese Anordnung den Vorteil des wesentlich geringeren Aufwandes, weil Fahrzeugparameter, beispielsweise die Last oder die Farzeuggeschwindigkeit, nicht erfaßt zu werden brauchen.

Weitere Vorteile ergeben sich aus der Beschreibung und der beigefügten Zeichnung.

Ausführungsbeispiele der Erfindung sind in der Zeichnung dargestellt und werden in der nachfolgenden Beschreibung näher erläutert. Es zeigen:

Fig. 1    eine Schemazeichnung eines Ausführungsbeispiels einer erfindungsgemäßen Schalteinrichtung in Gesamtdarstellung;

Fig. 2    eine vergrößerte Teilansicht von Fig. 1 zur Erläuterung der Positionierung der Sensoren;

Fig. 3    ein Blockschaltbild einer Ausführungsform einer erfindungsgemäßen elektronischen Steuerung;

Fig. 4    einen Verlauf von Drehzahlen über der Zeit zur Erläuterung des Blockschaltbildes gemäß Fig. 3;

Fig. 5    ein Ausführungsbeispiel eines Phasendetektors für Analogsignale;

Fig. 6    den zeitlichen Verlauf einer Phasenbeziehung zur Erläuterung des Blockschaltbildes gemäß Fig. 5;

Fig. 7    ein Ausführungsbeispiel eines Phasendetektors für Digitalsignale;

Fig. 8    den zeitlichen Verlauf von Zählerständen zur Erläuterung des Blockschaltbildes gemäß Fig. 7;

Fig. 9    eine Prinzipdarstellung eines Induktionssensors, wie er im Rahmen der vorliegenden Erfindung verwendet werden kann.

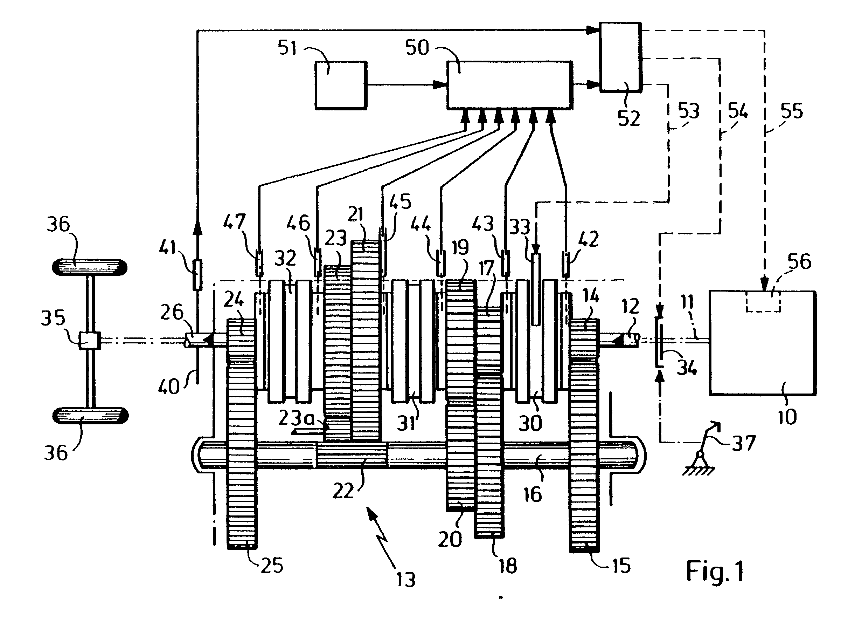

In Fig. 1 bezeichnet 10 insgesamt den Antriebsmotor eines Kraftfahrzeuges, der mit einer Motorwelle 11 versehen ist. Die Motorwelle 11 steht mit einer Antriebswelle 12 eines gesamthaft mit 13 bezeichneten Getriebes in Verbindung. Das Getriebe 13 ist von herkömmlicher Bauart und umfaßt ein erstes Zahnradpaar 14, 15 für den vierten, direkten Gang, wobei das mit dem Zahnrad 14 kämmende Zahnrad 15 auf einer Vorgelegewelle 16 angeordnet ist. Weitere Zahnradpaare 17, 18 für den dritten Gang, 19, 20 für den zweiten Gang, 21, 22 für den ersten Gang, 23, 23a, 22 für den Rückwärtsgang und 24, 25 für den fünften Gang sind auf einer Abtriebswelle 26 bzw. der Vorgelegewelle 16 angeordnet, wobei mit 22 eine Verzahnung der Vorgelegewelle 16, 11 angedeutet ist.

Zwischen den Zahnradpaaren 14/15 und 17/18 befindet sich eine beidseitig wirksame Schaltmuffe 30, weitere Schaltmuffen 31 und 32 befinden sich zwischen den Zahnradpaaren 19/20 und 21/22 bzw. 23/22 und 24/25.

In bekannter Weise sind alle Zahnräder 15, 18, 20, 25 bzw. Verzahnungen 22 der Vorgelegewelle 16 auf dieser fest angeordnet und die Zahnräder 17, 19, 21, 23 und 24 laufen lose auf der Abtriebswelle 26. Die Schaltmuffen 30, 31, 32 sind mit der Abtriebswelle 26 drehfest verbunden und auf dieser axial verschiebbar. Zum seitlichen Verschieben der Schaltmuffen 30, 31, 32 dienen Schaltgabeln, von denen an der Schaltmuffe 30 eine mit dem Bezugszeichen 33 angedeutet ist. Die Schaltmuffen 30, 31, 32 sind über geeignete formschlüssige Ausbildungen, insbesondere Zahnkränze, mit einem der Zahnräder 14, 17, 19, 21, 23, 24 verbindbar, so daß bei jeweils einem Zahnrad ein drehfeste Verbindung mit der Abtriebswelle 26 hergestellt und somit eine bestimmte Übersetzungsstufe im Getriebe 13 eingestellt wird.

Zwischen Motorwelle 11 und Antriebswelle 12 des Getriebes 13 befindet sich in ebenfalls an sich bekannter Weise noch eine Trennkupplung 34, die entweder in herkömmlicher Weise über ein Kupplungspedal 37 oder in weiter unten noch zu schildernder Weise automatisch betätigt wird.

Die Abtriebswelle 26 arbeitet auf ein Differential 35, von dem Antriebsräder 36 des Kraftfahrzeuges bewegt werden.

Diese Merkmale sind an sich bekannt und nicht Gegenstand der vorliegenden Erfindung.

Die Abtriebswelle 26 trägt eine Zahnscheibe 40, die mit einem Abtriebs-Sensor 41 zusammenwirkt. Weitere Zahnrad-Sensoren 42, 43, 44, 45, 46 und 47 wirken mit von der Antriebswelle 12 angetriebenen Elementen des Getriebes 13 zusammen, wie dies weiter unten noch erläutert wird.

Die Sensoren 41 bis 47 wirken mit Marken der Scheibe 40 sowie der erwähnten Elemente zusammen, wobei im Rahmen der vorliegenden Erfindung unter Marken alle möglichen Diskontinuitäten wie Zähne, Blenden, magnetische Einsätze, Lichtreflektoren und dergleichen verstanden werden.

Die Zahnrad-Sensoren 42 bis 47 sind an einen Demultiplexer 50 angeschlossen, der von einer Gangwahleinheit 51 gesteuert wird. Die Gangwahleinheit 51 wählt je nach vorliegendem Gangbefehl das Signal eines der Zahnrad-Sensoren 42 bis 47 aus und leitet dies an eine Auswerteinheit 52 weiter, die weiterhin noch mit dem Signal des Abtriebs-Sensors 41 beaufschlagt ist. Eine erste Ausgangsleitung 53 der Auswerteinheit 52 dient zum Betätigen der Schaltgabeln, in Fig. 1 beispielhaft der Schaltgabel 33, eine zweite Ausgangsleitung 54 kann gegebenenfalls die Trennkupplung 34 steuern und eine dritte Ausgangsleitung 55 wirkt gegebenenfalls auf eine Motorsteuerung, beispielsweise eine Einspritzpumpe oder einen Vergaser des Antiebsmotors 10 ein.

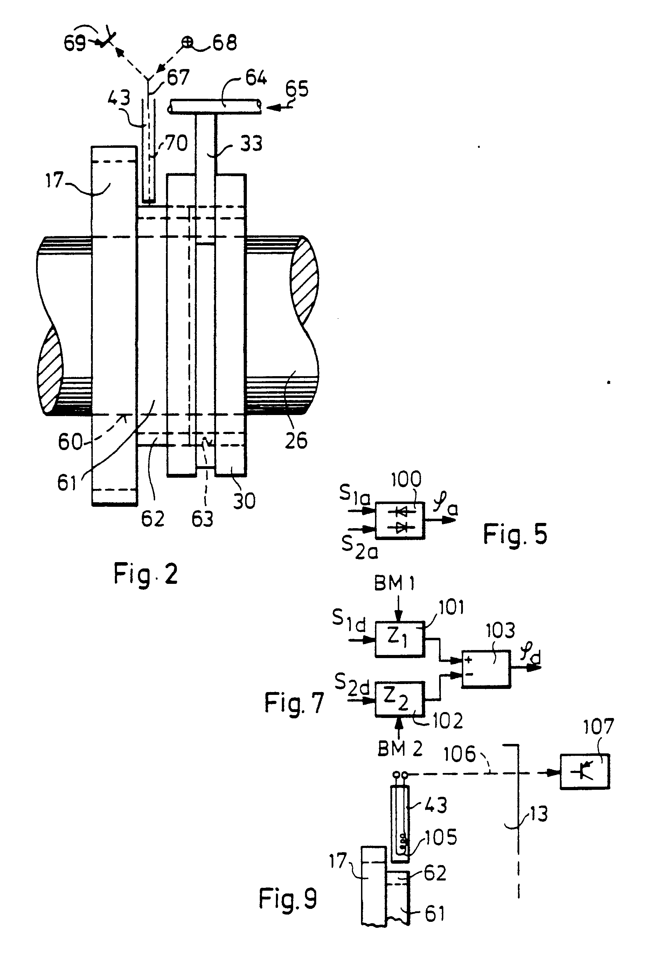

Fig. 2 zeigt mit weiteren Einzelheiten, daß das Zahnrad 17 in einem Sitz 60 lose auf der Abtriebswelle 26 sitzt. Da sämtliche Zahnräder 5, 18, 20, 22, 25 der Vorgelegewelle 16 ständig über das Zahnrad 14 von der Antriebswelle 12 angetrieben werden und sämtliche Zahnräder des Getriebes 13 in der aus Fig. 1 ersichtlichen Weise miteinander kämmen, dreht sich das Zahnrad 17 ständig auf der Abtriebswelle 26, und zwar so lange lose, wie der dritte Gang nicht eingelegt ist.

Auf der der Schaltmuffe 30 zu weisenden Seite ist das Zahnrad 17 mit einem Vorsprung in Form eines Kraftübertragungsrades 61 versehen, das mit einer Außenverzahnung 62 versehen ist. Die Außenverzahnung 62 ist passend zu einer Innenverzahnung 63 der Schaltmuffe 30 gestaltet, wobei die Schaltmuffe 30 - wie bereits erwähnt - drehfest mit der Abtriebswelle 26 und axial auf dieser verschiebbar angeordnet ist. Wird nun die Schaltmuffe 30 mittels der Schaltgabel 33 und gegebenenfalls einer Stange 64 in Richtung des Pfeiles 65 nach links in Fig. 2 ausgelenkt, wenn der dritte Gang eingelegt werden soll, gerät die Verzahnung 62 in Eingriff mit der Innenverzahnung 63 und das Zahnrad 17 ist drehfest an die Abtriebswelle 26 angeschlossen.

Um einen für das Schließen des Kraftflusses zwischen den Verzahnungen 62 und 63 besonders günstigen Zustand von Zahnrad 17 und Schaltmuffe 30 zu ermitteln, wird die Drehung der Schaltmuffe 30, die ja drehfest mit der Abriebswelle 26 verbunden ist, über den Abtriebs-Sensor 41 erfaßt, während die Drehung des Zahnrades 17 über den Zahnrad-Sensor 43 erfaßt wird, der mit der Außenverzahnung 62 zusammenwirkt.

Erfindungsgemäß soll der Schaltvorgang so ablaufen, daß ein optimales Einfädeln der Außenverzahnung 62 in die Innenverzahnung 63 gewährleistet ist.

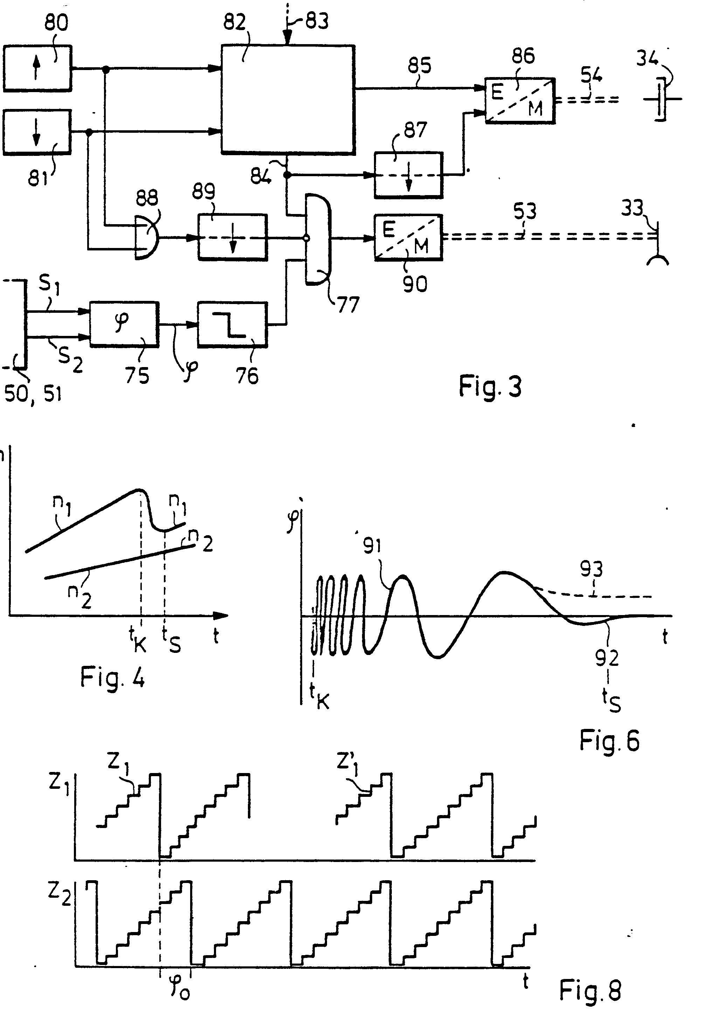

Hierzu kann man sich erfindungsgemäß einer Steuerung bedienen, wie sie in Gestalt eines Blockschaltbildes in Fig. 3 dargestellt ist.

Von den Elementen 50, 51 gelangen zwei Signale $S_1$, $S_2$ auf die eigentliche Steuereinheit, und zwar das Signal des Abtriebs-Sensors 41 sowie, je nach einzulegendem Gang, das Signal desjenigen Zahnrad-Sensors 42 bis 47, der dem einzulegenden Gang entspricht. Die Signale $S_1$, $S_2$ gelangen auf einen Phasendetektor 75, an dessen Ausgang ein Signal $\varphi$ anliegt, das der Phasenbeziehung der Signale $S_1$ zu $S_2$ entspricht. Das Phasensignal $\varphi$ gelangt auf einen Komparator, im dargestellten Ausführungsbeispiel einen Null-Detektor 76. Am Ausgang des Null-Detektors 76 erscheint demzufolge dann ein Signal, wenn die beiden Signale $S_1$, $S_2$ vollkommen in bzw. außer Phase sind, das heißt, wenn gilt:

$\varphi = 0$ bzw. $\varphi = 180°$. Zu diesem Zeitpunkt erscheint am Ausgang des Null-Detektors 76 ein positives logisches Signal, mit dem ein Eingang des UND-Gatters 77 beaufschlagt wird. Der Fahrer steuert das Getriebe beim Ausführungsbeispiel gemäß Fig. 3 über einen ersten Hand-Steuerschalter 80 für das Hochschalten und einen zweiten Hand-Steuerschalter 81 für das Rückschalten. Weitere Steuerschalter können gegebenenfalls für eine Neutralstellung, eine Parkstellung oder den Rückwärtsgang vorgesehen sein, sind jedoch in Fig. 3 der Einfachheit halber nicht dargestellt. Die Signale der Schalter 80, 81 gelangen auf ein Steuergerät 82, dem gegebenenfalls noch weitere Steuersignale über Eingänge 83 zugeführt werden können, beispielsweise von den bereits erwähnten weiteren Schaltern. Das Steuergerät 82 kann zur Definition des jeweils einzulegenden Ganges einen Ringzähler enthalten, der je nach Betätigung der Schalter 80 oder 81 um eine Position vorwärts oder rückwärts zählt.

Ein erster Ausgang 84 des Steuergerätes 82 ist mit einem weiteren Eingang des UND-Gatters 77 verbunden. Ein zweiter Ausgang 85 führt auf einen elektrisch/mechanischen Wandler, nämlich eine Servoeinrichtung 86. Eine Verzögerungseinrichtung 87 ist zwischen den ersten Ausgang 84 und einen weiteren Eingang der Servoeinrichtung 86 geschaltet, die die Trennkupplung 34 steuert.

Die Ausgänge der Hand-Steuerschalter 80, 81 sind auf ein ODER-Gatter 88 geführt, das eine weitere Verzögerungseinrichtung 81 steuert, die mit einem dritten, invertierten Eingang des UND-Gatters 77 verbunden ist. Das UND-Gatter 77 steuert eine weitere Servoeinrichtung 90, die die Schaltgabeln, beispielsweise die Schaltgabel 33, betätigt.

Die Funktion der erfindungsgemäßen Einrichtung soll nun anhand der Fig. 1 bis 4 für den Fall einer Zug-Hochschaltung vom zweiten in den dritten Gang erläutert werden:

In Fig. 4 sind über der Zeit t Drehzahlen n, nämlich die Drehzahl $n_1$ der Antriebswelle 12 sowie die Drehzahl $n_2$ der Abtriebswelle 26 aufgetragen. Bis zum Zeitpunkt $t_k$ wird das Fahrzeug im kleinen Gang beschleunigt und zu diesem Zeitpunkt $t_K$ soll vom zweiten in den dritten Gang hochgeschaltet werden. Dies bewirkt der Fahrer durch Betätigen des ersten Hand-Steuerschalters 80. Das Steuergerät 82 erzeugt am zweiten Ausgang 85 einen Steuerbefehl für die Servoeinrichtung 86, wodurch über die zweite Ausgangsleitung 54 die Kupplung 34 geöffnet wird.

Es versteht sich jedoch, daß bei einer Variante der Erfindung die Kupplung 34 auch in herkömmlicher Weise über das Kupplungspedal 37 betätigt werden kann.

Solange der zweite Gang noch eingelegt war, erscheint am Ausgang des Null-Detektors 76 ein positives logisches Signal, weil das Zahnrad 19 mit der Schaltmuffe 31 synchron umläuft. Aus diesem Grunde wird, um ein Durchschalten des UND-Gatters 77 zunächst über das ODER-Gatter 88 und die Verzögerungseinrichtung 89 sowie den invertierenden Eingang das UND-Gatter 77 kurzzeitig gesperrt. Diese Sperrung wirkt so lange, bis nach dem Öffnen der Kupplung 34 auch die Elemente des zweiten Ganges, nämlich die Schaltmuffe 31 und das Zahnrad 19 gelöst wurden, weil dann sowohl die Elemente 31/19 des alten Ganges wie auch die Elemente 17/30 des neuen Ganges unsynchron laufen und am Ausgang des Null-Detektors 76 auch bei Umschalten des Demultiplexers 50 auf den neuen Gang ein negatives logisches Signal anliegt.

Wie man Fig. 4 entnehmen kann, fällt nach dem Öffnen der Kupplung 34 zum Zeitpunkt $t_K$ die Antriebsdrehzahl des $n_1$ des Getriebes ab, ein Vorgang, der durch Beeinflussen der Motorsteuerung 56 über den dritten Ausgang 55 beschleunigt werden kann.

Die Drehzahlen $n_1$, $n_2$ gleichen sich nun auf ein Verhältnis an, das dem Übersetzungsverhältnis der Zahnräder 17, 18 im dritten Gang entspricht. Wenn dies zum Zeitpunkt $t_S$ in Fig. 4 der Fall ist, erkennt der Phasendetektor 75 mit Null-Detektor 76, auf deren Funktion weiter unten noch im einzelnen eingegangen wird, daß zu einem bestimmten Zeitpunkt die Phasenbeziehung, z. B. $\varphi = 0$ oder $\varphi = 180°$, besteht. Dies bedeutet, daß die Verzahnungen 62, 63 in vorbestimmter Weise einander gegenüberstehen.

Sofern die Steuerung so ausgelegt ist, daß für jeden Gang ein eigenes UND-Gatter 77 zur Verfügung steht, hatte das Steuergerät 82 zuvor über den zweiten Ausgang 84, der einem Speicherplatz des Ringzählers entsprechen kann, ein positives logisches Einschaltsignal für den betreffenden Gang, im Ausführungsbeispiel den dritten Gang gegeben, so daß bei Eintreffen des positiven logischen Signales vom Null-Detektor 76 das UND-Gatter 77 nunmehr durchschaltet, weil die Standzeit der Verzögerungseinrichtung 89 zuvor schon abgelaufen war. Über die Servoeinrichtung 90 und die erste Ausgangsleitung 53 wird nun die Schaltgabel 33 betätigt und im zuvor geschilderten optimalen Zeitpunkt das Kraftübertragsrad 61 mit der Schaltmuffe 30 in Eingriff gebracht.

Über die Verzögerungeinrichtung 87, deren Standzeit so bemessen ist, daß alle im Betrieb auftretenden Schaltzeiten berücksichtigt sind, wird nun die Servoeinrichtung 86 so angesteuert, daß über die zweite Ausgangsleitung 54 die Kupplung 34 wieder geschlossen wird.

Der Gangwechsel ist damit abgeschlossen.

Es versteht sich, daß die in Fig. 3 dargestellte logische Schaltungsanordnung nur beispielhaft zu verstehen ist und derselbe logische Ablauf selbstverständlich auch mit anderen logischen Netzwerten erreichbar ist, wie dies an sich bekannt ist.

Die Wirkungsweise des Phasendetektors 75 soll nun anhand von zwei Ausführungsbeispielen beschrieben werden:

Fig. 5 zeigt einen Phasendetektor für Analogsignale $S_{1a}$ und $S_{2a}$, der als Mischer 100 ausgebildet ist. Das analoge Ausgangssignal $\varphi_a$ hat beim Einlegen des neuen Ganges einen Verlauf, wie er in Fig. 6 schematisch dargestellt ist. Man erkennt zum Zeitpunkt $t_K$ einen periodischen Phasenverlauf 91, der der Differenzdrehzahl entspricht. Der Verlauf 91 geht dann stetig in eine Gleichspannung über, wenn die Differenzdrehzahl zu Null wird. Befinden sich die Zahnkränze 62 und 63 dann in einer vorbestimmten Phasenbeziehung, strebt der Verlauf 92 dem Endwert Null zu. Dies ist der bevorzugte Fall der vorliegenden Erfindung, bei dem zum Zeitpunkt $t_S$ die Zahnkränze 62, 63 miteinander in Eingriff gebracht werden. Bei bekannten Einrichtungen, die lediglich auf die Drehzahldifferenz ansprechen, könnte sich auch ein Verlauf 63 mit einem Endwert ungleich Null einstellen, in dem die Zahnkränze 62, 63 zwar keine Relativdrehung zueinander mehr durchführen, aber in einer von einer Sollage abweichenden Drehlage verharren.

Fig. 7 zeigt ein weiteres Ausführungsbeispiel eines Phasendetektors für digitale Eingangssignal $S_{1d}$, $S_{2d}$. Die digitalen Eingangssignale $S_{1d}$, $S_{2d}$ gelangen auf Zähler 101, 102, die von Bezugsmarken BM 1 bzw. BM 2 synchronisiert sind. Diese Bezugsmarken können bei Zahnkränzen als in der Form abweichende Zähne, als Bezugszapfen in der Nähe eines bestimmten Zahnes auf dem Zahnrad oder dergleichen ausgebildet sein, wie dies an sich bekannt ist. Die Zählerstände der Zähler 101, 102 werden einer Subtrahierstufe 103 zugeführt, an deren Ausgang das digitale Phasensignal $\varphi_d$ abnehmbar ist.

In Fig. 8 sind die Zählerstände $Z_1$, $Z_2$ über der Zeit t aufgetragen. Man erkennt in der linken Hälfte von Fig. 8, daß die Zähler Z 1, Z 2 zwar jeweils in der gleichen Stufung bis zum selben Endwert zählen, weil die Verzahnungen 62, 63 gleich ausgebildet sind, die Zähler 101, 102 sind jedoch außer Phase und zwar um einen Differenzwert 0 versetzt. Dieser Fall entspricht dem Verlauf 93 von Fig. 6, weil zwar die Drehzahlen der Elemente 17, 30 gleich sind, die relative Drehlage jedoch nicht übereinstimmt. Erst in der rechten Hälfte von Fig. 8 ist mit einem Zählerstand $Z_1$, ein Zustand erreicht, bei dem beide Verzahnungen 62, 63 drehzahl- und phasensynchron umlaufen, so daß erfindungsgemäß der Gang eingelegt werden kann.

Aus der vorstehenden Erläuterung wird auch erkennbar, daß der analoge Phasendetektor gemäß Fig. 5 und 6 eine definierte Phasenlage zwischen Zähnen und Zahnlücken der Verzahnungen 62, 63 zueinander zu erkennen erlaubt, dabei jedoch nicht unterscheidet, welcher Zahn gegenüber welcher Lücke steht. Der digitale Phasendetektor gemäß Fig. 7 und 8 geht demgegenüber noch insofern einen Schritt weiter, weil er zusätzlich zu erkennen gestattet, wann die Verzahnungen 62, 63 auch bezüglich ihrer Bezugsmarken und damit bezüglich jedes einzelnen Zahnes eine bestimmte Sollage zueinander einnehmen.

Der ideale Synchronpunkt der vorliegenden Erfindung ist dann erreicht, wenn (bestimmte) Zähne exakt (bestimmten) Zahnlücken gegenüberstehen, d.h. wenn die Signale $S_1$, $S_2$ 180° außer Phase sind. Man kann jedoch ohne weiteres bei entsprechenden Markierungen der Zahnscheibe 40 und der Verzahnungen 62 den Sensor 41 zu allen anderen Sensoren 42 - 47 um eine halbe Zahnteilung im Winkel versetzen, so daß bei dem Synchronpunkt die Signale $S_1$, $S_2$ exakt in Phase sind.

Die im Rahmen der vorliegenden Erfindung verwendeten Sensoren können nach unterschiedlichen Prinzipien arbeiten.

Bei dem in Fig. 2 dargestellten Ausführungsbeispiel des Zahnrad-Sensors 43 findet ein Lichtleiter 67 Verwendung, der in der einen Richtung mit einer Lichtquelle 68 und in der entgegengesetzten Richtung mit einem photoempfindlichen Element 69 beschaltet ist. Die Lichtquelle 68 sendet einen Lichtstrahl 70 aus, der auf die Außenverzahnung 62 des Kraftübertragungsrades 61 trifft. Von diesem reflektiert, gelangt der Lichtstrahl 70 auf das photoempfindliche Element 69, wobei dieser Reflektionsvorgang durch die Außenverzahnung 62 moduliert wird.

Bei einer anderen Ausführungsform, wie sie in Fig. 9 dargestellt ist, weist der Sensor 43 eine Induktionsspule 105 auf, deren Induktivität von der Außenverzahnung 62 moduliert wird. Über eine Leitung 106 wird das Signal des Sensors 43 einer Auswert-Elektronik 107 zugeführt, die zweckmäßigerweise außerhalb des Getriebes 13 angeordnet und daher den hohen Temperaturen des Getriebeöls nicht mehr ausgesetzt ist.

**Patentansprüche**

1. Schalteinrichtung für Kraftfahrzeug-Stufengetriebe mit Zugkraftunterbrechung, bei dem Übersetzungsstufen über formschlüssige Elemente in den Kraftfluß zwischen einer Antriebswelle (12) und einer Abtriebswelle (26) des Getriebes (13) schaltbar sind, mit Hand-Steuerschaltern (80, 81), die an ein Steuergerät (82) angeschlossen sind, wobei das Steuergerät (82) über Servoeinrichtungen (90) die formschlüssigen Mittel betätigt, mit einem Sensor (41) und weiteren Sensoren (42 bis 47), die mit rotierenden Marken der Abtriebswelle (26) sowie anderer sich drehender Teile des Getriebes (13) zusammenwirken, und mit Schaltmitteln (75, 76), die aus den Signalen ($S_1$, $S_2$) der Sensoren (41 bis 47) einen Synchronpunkt des Getriebes (13) ermitteln und bei Erreichen des Synchronpunktes ein Schließen der formschlüssigen Elemente des einzulegenden Ganges bewirken, dadurch gekennzeichnet, daß die weiteren Sensoren (42 bis 47) mit Marken der von der Antriebswelle (12) angetriebenen formschlüssigen Elemente (14, 17, 19, 21, 23, 24) zusammenwirken, daß die Schaltmittel (75, 76) die Phasenlage $\varphi$ zwischen diesen Elementen und der Abtriebswelle (26) ermitteln und bei Erreichen einer vorbestimmten Phasenlage ein Schließen der formschlüssigen Elemente bewirken.

2. Schalteinrichtung nach Anspruch 1, dadurch gekennzeichnet, daß die formschlüssigen Elemente Schaltmuffen (30 bis 32) und Verzahnungen von die Übersetzungsstufen bildenden Zahnrädern (14, 17, 19, 21, 23, 24) des Getriebes (13) sind, die gemeinsam auf der Abtriebswelle (26) angeordnet sind, wobei die Schaltmuffen (30 bis 32) drehfest mit der Abtriebswelle (26) verbunden sind, während sich lose auf der Abtriebswelle (26) drehende Zahnräder (14, 17, 19, 21, 23, 24) ständig von der Antriebswelle (12) angetrieben werden.

3. Schalteinrichtung nach Anspruch 2, dadurch gekennzeichnet, daß die Verzahnungen Außenverzahnungen (62) sind und daß die weiteren Sensoren (42 bis 47) mit den Außenverzahnungen (62) zusammenwirken.

4. Schalteinrichtungen nach einem der Ansprüche 1 bis 3, dadurch gekennzeichnet, daß die Signale (S 1, S 2) der Sensoren (42 bis 47) einem Phasendetektor (75) mit nachgeschaltetem Komparator zugeführt werden.

5. Schalteinrichtung nach Anspruch 4, dadurch gekennzeichnet, daß der Komparator ein Nulldetektor (76) ist.

6. Schalteinrichtung nach einem der Ansprüche 4 oder 5, dadurch gekennzeichnet, daß die Signale (S 1a, S 2a) Analogsignale sind und der Phasendetektor (75) ein Mischer (100) ist.

7. Schalteinrichtung nach einem der Ansprüche 4 oder 5, dadurch gekennzeichnet, daß die Marken der Abtriebswelle (26) und der formschlüssigen Elemente jeweils eine Bezugsmarke (BM 1, BM 2) aufweisen, daß die Signale (S 1d, S 2d) Digitalsignale sind, daß der Phasendetektor (75) mit den Bezugsmarken (BM 1, BM 2) synchronisierte Zähler (101, 102) sowie eine Subtrahierstufe (103) umfaßt.

8. Schalteinrichtung nach einem der Ansprüche 1 bis 7, dadurch gekennzeichnet, daß die weiteren Sensoren (42 bis 47) einen Lichtleiter (67) umfassen, der einen Lichtstrahl (70) auf die Marken der formschlüssigen Elemente wirft und einen von den Marken reflektierten Lichtstrahl (70) auffängt.

9. Schalteinrichtung nach einem der Ansprüche 1 bis 7, dadurch gekennzeichnet, daß die weiteren Sensoren (42 bis 47) eine Spule (105) umfassen, deren Auswerte-Elektronik (107) im Abstand von den Sensoren (43) angeordnet ist.

10. Schalteinrichtung nach einem der Ansprüche 1 bis 9, dadurch gekennzeichnet, daß zwei Hand-Steuerschalter (80, 81) vorgesehen sind, mit denen ein Hoch- bzw. Rückschalten des Getriebes (13) um jeweils einen Gang auslösbar ist und daß das Steuergerät (82) den jeweils einzulegenden Gang aus einem Ringzähler ausliest.

**Claims**

1. Gear-shift mechanism for motor-vehicle multi-step transmissions with interruption of traction in which transmission steps can be connected, via form-locking elements, into the flux of force between a drive shaft (12) and a power take-off shaft (26) of the transmission (13), comprising manual control switches (80, 81) connected to a control unit (82) which actuates the form-locking means via servo systems (90), and comprising a sensor (41) and additional sensors (42 to 47) coacting with rotating marks on the power take-off shaft (26) and on other rotating parts of the transmission (13), and shifting means (75, 76) which derive from the signals $(S_1, S_2)$ of the sensors (41 to 47) a point of synchronism of the transmission (13) and, when the said point is reached, cause the form-locking elements of the speed to be engaged to close, characterized in that the said additional sensors (42 to 47) coact with said marks on said form-locking elements (14, 17, 19, 21, 23, 24) driven by the drive shaft (12), that said shifting means (75, 76) determine the relative phase position $\varphi$ between said elements and said power take-off shaft (26) and cause said form-locking elements to close when a pre-determined phase positioned is reached.

2. Gear-shift mechanism according to claim 1, wherein said form-locking elements are gearshift sleeves (30 to 32) and toothings on gears (14, 17, 19, 21, 23, 24) of said transmission (13) representing the speed steps of the latter and being commonly arranged on said power take-off shaft (26), said gearshift sleeves (30 to 32) being fixed to said power take-off shaft (26) to rotate therewith while gears (14, 17, 19, 21, 23, 24) turning loosely on said power take-off shaft (26) are constantly driven by said drive shaft (12).

3. Gear-shift mechanism according to claim 2, wherein the toothings are external toothings (62) and the additional sensors (42 to 47) coact with said external toothings (62).

4. Gear-shift mechanism according to any of claims 1 to 3, wherein the signals $(S_1, S_2)$ of said sensors (42 to 47) are supplied to a phase detector (75) whose output is connected to a comparator.

5. Gear-shift mechanism according to claim 4, wherein said comparator is a zero detector (76).

6. Gear-shift mechanism according to any of claims 4 or 5, wherein said signals $(S_{1a}, S_{2a})$ are analog signals and said phase detector (75) is a mixer (100).

7. Gear-shift mechanism according to any of claims 4 or 5, wherein said marks on said power take-off shaft (26) and on said form-locking elements comprise each a reference mark (BM1, BM2), the signals (S1d, S2d) are digital signals, and said phase detector (75) comprises counters (101, 102) operating in synchronism with said reference marks (BM1, BM2), and a subtractor stage (103).

8. Gear-shift mechanism according to any of claims 1 to 7, wherein said additional sensors (42 to 47) comprise a fiber-optical light guide (67) for projecting a beam (70) upon said marks of said form-locking elements and receiving a beam (70) reflected by said marks.

9. Gear-shift mechanism according to any of claims 1 to 7, wherein said additional sensors (42 to 47) comprise a coil (105) whose electric evaluation system (107) is arranged at a distance from said sensors (43).

10. Gear-shift mechanism according to any of claims 1 to 9, wherein two hand-operated control switches (80, 81) are provided for shifting said transmission (13) up or down, respectively, by one step and in which said control unit (82) reads out the step to be engaged at any given time from a ring counter.


**Revendications**

1. Système de changement de vitesse pour les engrenages réducteurs des véhicules à moteur avec interruption de la force de traction, dans lequel des étages de transmission par éléments à engagement positif sont embrayables sur le flux d'énergie entre un arbre d'entraînement (12) et un arbre récepteur (26) de la boite de vitesse (13), avec des commutateurs de commande manuelle (80, 81), qui sont associés à un dispositif de commande (82), le dispositif de commande (82) étant commandé par des servo-mécanismes (90) qui commandent les moyens à engagement positif, avec un palpeur (41) et d'autres palpeurs (42) à (47), qui coopèrent avec des repères rotatifs de l'arbre récepteur (26) ainsi que d'autres parties rotatives de la boite de vitesse (13), et avec des moyens de commutation (75, 76), qui à partir des signaux $S_1$, $S_2$ des palpeurs (41) à (47) détectent un point synchrone de la boite de vitesse (13) et, lorsque ce point est atteint, commandent une fermeture des éléments à engagement positif de la vitesse à enclencher, caractérisé en ce que les autres palpeurs (42) à (47) coopèrent avec des repères des éléments à engagement positif (14, 17, 19, 21, 23, 24) entraînés par l'arbre d'entraînement (12), que les moyens de commutation (75, 76) détectent la relation de phase φ entre ces éléments et l'arbre récepteur (26) et, lorsqu'une relation de phase prédéterminée est atteinte, effectuent une fermeture des éléments à engagement positif.

2. Système de changement de vitesse selon la revendication 1, caractérisé en ce que les éléments à engagement positif sont des manchons d'embrayage (30) à (32) et des dentures des roues dentées (14, 17, 19, 21, 23, 24) formant les étages de transmission, qui sont situés ensemble sur l'arbre récepteur (26), les manchons d'embrayage (30) à (32) étant reliés de manière fixe à l'arbre récepteur (26), tandis que des roues dentées (14, 17, 19, 21, 23, 24) rotatives folles sur l'arbre récepteur (26), sont constamment entraînées par l'arbre d'entraînement (12).

3. Système de changement de vitesse selon la revendication 2, caractérisé en ce que les dentures sont des dentures externes (62) et que les autres palpeurs (42) à (47) coopèrent avec les dentures externes (62).

4. Système de changement de vitesse selon l'une des revendications 1 à 3, caractérisé en ce que les signaux $S_1$, $S_2$ des palpeurs (42) à (47) sont amenés à un détecteur de phases (75) avec un comparateur intercalé en arrière.

5. Système de changement de vitesse selon la revendication 4, caractérisé en ce que le comparateur est un détecteur de zéro (76).

6. Système de changement de vitesse selon l'une des revendications 4 et 5, caractérisé en ce que les signaux ($S_{1a}$, $S_{2a}$) sont des signaux analogiques et le détecteur de phases (75) est un mélangeur (100).

7. Système de changement de vitesse selon l'une des revendications 4 et 5, caractérisé en ce que les repères de l'arbre récepteur (26) et des éléments à engagement positif présentent chacun un repère de référence ($BM_1$, $BM_2$), que les signaux ($S_{1d}$, $S_{2d}$) sont des signaux numériques, que le détecteur de phases (75) avec les repères de référence ($BM_1$, $BM_2$) comprend des compteurs synchronisés (101, 102) ainsi qu'un étage de soustraction.

8. Système de changement de vitesse selon l'une des revendications 1 à 7, caractérisé en ce que les autres palpeurs (42) à (47) comprennent une fibre optique (67), qui envoie un rayon lumineux (70) sur les repères des éléments à engagement positif et reçoit un rayon lumineux (70) réfléchi par les repères.

9. Système de changement de vitesse selon l'une des revendications 1 à 7, caractérisé en ce que les autres palpeurs (42) à (47) comprennent une bobine (105), dont la sélection électronique (107) est située à distance des palpeurs (43).

10. Système de changement de vitesse selon l'une des revendications 1 à 8, caractérisé en ce que sont prévus deux commutateurs de commande manuelle (80, 81), avec lesquels on peut dégager une vitesse en haut ou la marche arrière du changement de vitesse (13), chacun pour une vitesse et que le dispositif de commande (82) sélectionne la vitesse à enclencher à partir d'un compteur annulaire.

EP 0 201 570 B1

Fig.1

Fig. 2

Fig. 5

Fig. 7

Fig. 9

Fig. 3

Fig. 4

Fig. 6

Fig. 8